# EUROPÄISCHE PATENTSCHRIFT

(11) **EP 3 320 304 B1**
(45) Veröffentlichungstag und Bekanntmachung des Hinweises auf die Patenterteilung: **13.10.2021**
(21) Anmeldenummer: 16728670.7
(22) Anmeldetag: 08.06.2016
(51) Int. Cl.: G01C 15/00, G01C 3/08, G01B 11/03

(54) **LÄNGENMESSUNG AN EINEM OBJEKT DURCH ANPEILEN VON MESSPUNKTEN MITTELS EINEM LASER-MESSMODUL**
MEASURING LENGTH AT AN OBJECT BY SIGHTING OF MEASURING POINTS USING A LASER MEASURING MODULE
MESURER DES LONGEURS À UN OBJET EN VISANT DES POINTS DE MESURES UTILIANT UN MODULE DE MESURE PAR LASER

(30) Priorität: 08.07.2015 DE 102015212752; 27.07.2015 DE 102015214148
(43) Veröffentlichungstag der Anmeldung: 16.05.2018
(73) Patentinhaber: Robert Bosch GmbH, 70442 Stuttgart (DE)
(72) Erfinder: ASSMANN, Steffen, 70771 Leinfelden-Echterdingen (DE); TODOROV, Stoyan, 70176 Stuttgart (DE)
(86) Internationale Anmeldenummer: PCT/EP2016/062937
(87) Internationale Veröffentlichungsnummer: WO 2017/005439

(56) Entgegenhaltungen:
- EP-A1- 1 293 755
- EP-A1- 2 698 602
- EP-A1- 3 021 078
- EP-A2- 1 460 377
- WO-A1-2013/007917
- WO-A1-2013/045517

## Beschreibung

### Stand der Technik

Es ist bereits ein System mit einem Laser-Messmodul, das zu einer Längenmessung vorgesehen ist, und mit zumindest einem Anzeigemodul, das zumindest dazu vorgesehen ist, zumindest einen mittels des Laser-Messmoduls angepeilten Messpunkt elektronisch darzustellen, vorgeschlagen worden.

Aus WO 2013/007917 A1 ist ein System aus Theodolit und Anzeigemodul bekannt, bei dem Messpunkte an einer Struktur in einem Bild der Struktur angezeigt werden.

EP 3 021 078 A1 gehört zum Stand der Technik unter Artikel 54(3) EPÜ. Das Dokument beschreibt ein geodätisches Vermessungssystem mit einer Positionsbestimmungseinheit zum Bestimmen einer Messpunktposition und handgehaltener Anzeigeeinheit zur Anzeige der Messumgebung.

### Offenbarung der Erfindung

Die Erfindung geht aus von einem System mit einem Laser-Messmodul, das zu einer Längenmessung vorgesehen ist, und mit zumindest einem Anzeigemodul, das zumindest dazu vorgesehen ist, zumindest einen mittels des Laser-Messmoduls angepeilten Messpunkt elektronisch darzustellen.

Ein erfindungsgemäßes System ist in Anspruch 1 angegeben. Dadurch kann ein Benutzer die Position eines Messpunktes besonders einfach auf einem Messobjekt erkennen. Ein Blickwechsel zwischen verschiedenen Anzeigen kann vermieden werden. Es kann ein besonders effizienter Messvorgang erreicht werden. Eine für ein menschliches Auge gefährliche Laserstrahlung kann vermieden werden. Es kann ein besonders sicheres System bereitgestellt werden. Es kann ein besonders kostengünstiges System bereitgestellt werden. Unter einem "Laser-Messmodul" soll in diesem Zusammenhang ein Modul verstanden werden, das zumindest ein handgehaltenes Laser-Messgerät, zu einer Längenmessung mittels zumindest eines Laserstrahls umfasst. Vorzugsweise weist der Laser eine Frequenz außerhalb eines sichtbaren Spektrums auf. Alternativ kann der Laser eine Frequenz innerhalb eines sichtbaren Spektrums aufweisen. Das Laser-Messgerät ist dazu vorgesehen, im Raum bewegt zu werden, insbesondere geschwenkt zu werden zu einer Änderung einer Abstrahlrichtung des Laserstrahls. Es ist auch denkbar, dass das Laser-Messgerät zumindest ein Strahllenkmittel umfasst, das zu einer Änderung der Abstrahlrichtung des Laserstrahls vorgesehen ist. Unter "elektronisch" darstellen soll in diesem Zusammenhang insbesondere mittels eines elektronischen bildgebenden und/oder bilderzeugenden Verfahrens, beispielsweise mittels eines Röhren-, TFT-, LCD-, LED-Bildschirms oder eines anderen dem Fachmann geeignet erscheinenden elektronischen Bildschirms und/oder mittels eines Röhren-, TFT-, LCD-, LED-Projektors oder eines anderen dem Fachmann geeignet erscheinenden elektronischen Projektors. Das Ausgebemodul blendet ein Abbild des Messpunktes in ein Sichtfeld eines Benutzers und/oder in eine Umgebungsdarstellung ein. Unter "separat ausgebildet" oder "abnehmbar" soll in diesem Zusammenhang insbesondere verstanden werden, dass das Laser-Messmodul und das Anzeigemodul insbesondere räumlich beabstandet und/oder ohne eine feste mechanische Verbindung zueinander betreibbar sind. Vorzugsweise weisen das Laser-Messmodul und das Anzeigemodul jeweils ein Gehäuse oder eine Rahmeneinheit auf, wobei das Gehäuse oder die Rahmeneinheit des Laser-Messmoduls getrennt von dem Gehäuse oder der Rahmeneinheit des Anzeigemoduls ausgebildet ist. Das Anzeigemodul ist dazu vorgesehen, zumindest in einem Raumbereich, unabhängig von dem Laser-Messmodul bewegt zu werden, d.h. räumlich verschoben und/oder gedreht zu werden. Vorzugsweise weist das Anzeigemodul zumindest ein Befestigungsmittel auf, das dazu vorgesehen ist, das Anzeigemodul an einem menschlichen Körper, insbesondere an einem Kopf, zu fixieren. Alternativ kann das Anzeigemodul als ein handgehaltenes Anzeigemodul ausgebildet sein, und zumindest einen Handgriff und/oder zumindest eine Grifffläche aufweisen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das System weist zumindest eine Kommunikationsvorrichtung auf, die dazu vorgesehen ist, zumindest Positionsdaten des angepeilten Messpunkts von dem Laser-Messmodul zu dem Anzeigemodul zu übertragen. Dadurch kann ein besonders vielseitig einsetzbares System bereitgestellt werden. Eine Position des angepeilten Messpunktes kann ohne Zeitverlust erkannt werden. Unter einer "Kommunikationsvorrichtung" soll in diesem Zusammenhang insbesondere eine elektronische Datenübertragungsvorrichtung verstanden werden. Vorzugsweise ist die Kommunikationsvorrichtung zu einer drahtlosen, insbesondere funkgestützten, Datenübertragung vorgesehen und/oder weist zumindest eine Funkdatenschnittstelle auf. Alternativ oder zusätzlich kann die Kommunikationsvorrichtung zu einer leitungsgebundenen Datenübertragung vorgesehen sein. Es ist denkbar, dass das Laser-Messmodul und das Anzeigemodul mittels eines flexiblen Kabels, insbesondere zu einer Energieübertragung und/oder zu einer Datenübertragung, miteinander verbunden sind. Unter "Positionsdaten" sollen in diesem Zusammenhang insbesondere Daten zu einer Lokalisierung in einem Bezugssystem verstanden werden, beispielsweise Koordinaten in einem Koordinatensystem. Vorzugsweise sind die Positionsdaten als Koordinaten in einem Koordinatensystem des Laser-Messmoduls oder in einem Koordinatensystem eines Laser-Messgeräts des Laser-Messmoduls ausgebildet. Alternativ können die Positionsdaten als Koordinaten eines Koordinatensystems des Anzeigemoduls ausgebildet sein. Es ist auch denkbar, dass die Positionsdaten als Koordinaten eines ortsfesten Koordinatensystems oder eines anderen dem Fachmann als sinnvoll erscheinenden Koordinatensystems ausgebildet sind, beispielsweise als Koordinaten eines Positionierungssystems, insbesondere eines funkgestützten Positionierungssystems. Unter "ortsfest" soll in diesem Zusammenhang insbesondere fest gegenüber dem Messobjekt und/oder gegenüber einer Erdoberfläche verstanden werden. Vorzugsweise überträgt die Kommunikationsvorrichtung die Positionsdaten in einem Betriebszustand regelmäßig, insbesondere periodisch, und/oder in Echtzeit. Unter "regelmäßig" soll in diesem Zusammenhang insbesondere wiederholt in einem Zeitintervall von höchstens 0,5 s, vorzugsweise von höchstens 0,1 s, bevorzugt von höchstens 0,02 s und besonders bevorzugt von höchstens 0,01 s. Unter "in Echtzeit" soll in diesem Zusammenhang insbesondere für einen Benutzer scheinbar verzögerungsfrei verstanden werden. Vorzugsweise beträgt eine Verzögerung zwischen einer Änderung der Positionsdaten und einer Übertragung weniger als 0,5 s, vorzugsweise weniger als 0,1 s, bevorzugt weniger als 0,02 s und besonders bevorzugt weniger als 0,01 s.

Ferner wird vorgeschlagen, dass das Anzeigemodul zumindest eine Erfassungseinheit zu einer Erfassung von Umgebungsdaten aufweist. Dadurch können verschiedene Bezugssysteme für die Positionsdaten des zumindest einen Messpunks besonders genau abgeglichen werden. Dadurch können Positionsdaten zu einer Anzeige des zumindest einen Messpunktes besonders genau referenziert werden. Es können redundante Daten zu einem Abgleich von Bezugssystemen bereitgestellt und Fehler bei einem Abgleich erkannt und/oder vermieden werden. Unter einer "Erfassungseinheit" soll in diesem Zusammenhang insbesondere eine Einheit zu einer Erfassung mittels Wellen, insbesondere mittels Schallwellen und/oder mittels elektromagnetischer Wellen verstanden werden. Vorzugsweise weist die Erfassungseinheit zumindest eine Kamera zu einer Erfassung von Bilddaten auf. Vorzugsweise weist das Laser-Messmodul eine Erfassungseinheit zu einer Erfassung von Umgebungsdaten auf. Vorzugsweise weist das Laser-Messmodul zumindest eine Erfassungseinheit, beispielsweise eine Kamera, zu einer Erfassung von Umgebungsdaten auf. Bevorzugt weisen das Laser-Messmodul und das Anzeigemodul je zumindest eine Erfassungseinheit auf. Bevorzugt ist die Erfassungseinheit des Anzeigemoduls dazu vorgesehen, Umgebungsdaten zu erfassen zu einem Abgleich mit Umgebungsdaten aus einer anderen Quelle, insbesondere zu einem Abgleich mit Umgebungsdaten, die von der Erfassungseinheit des Laser-Messmoduls bereitgestellt werden.

Z Das umfasst eine Lageerfassungseinheit. Dadurch kann eine Lage des Anzeigemoduls zuverlässig relativ zu einer Lage des Laser-Messmoduls und/oder relativ zu einem ortsfesten Bezugssystem ermittelt werden. Unter einer "Lageerfassungseinheit" soll in diesem Zusammenhang insbesondere eine Einheit zu einer Erfassung einer Position und/oder einer Ausrichtung eines Objekts, insbesondere relativ zu einer zeitlich zurückliegenden Position und/oder Ausrichtung und/oder relativ zu einem Bezugssystem, verstanden werden. Vorzugsweise umfasst die Lageerfassungseinheit zumindest einen Inertialsensor, einen Kompass, und/oder ein Empfangsmittel für ein Positionierungssystem, insbesondere für ein funkgestütztes Positionierungssystem. Bevorzugt weist das Laser-Messmodul zumindest eine Lageerfassungseinheit auf. Bevorzugt weisen das Laser-Messmodul und das Anzeigemodul je zumindest eine Lageerfassungseinheit auf.

Z Das System umfasst eine Recheneinheit, die dazu vorgesehen ist, zumindest aus Positionsdaten des angepeilten Messpunktes und aus Lagedaten des Anzeigemoduls Koordinaten zu einer Anzeige des Messpunktes zu bestimmen. Dadurch kann ein besonders leistungsfähiges System bereitgestellt werden. Es kann ein einfacher Messvorgang erreicht werden. Es kann ein hoher Benutzerkomfort erreicht werden. Eine Wahrscheinlichkeit von Fehlbedienungen kann verringert werden. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Unter "Lagedaten" sollen in diesem Zusammenhang insbesondere Positionsdaten und/oder Ausrichtungsdaten verstanden werden. Vorzugsweise sind die Lagedaten als Koordinaten in einem Koordinatensystem angegeben. Bevorzugt ist die Recheneinheit dazu vorgesehen, zumindest aus Positionsdaten des angepeilten Messpunktes und/oder aus Lagedaten des Laser-Messmoduls und/oder aus Lagedaten des Anzeigemoduls Koordinaten zu einer Anzeige des Messpunktes zu bestimmen. Insbesondere ist die Recheneinheit zu einer Koordinatentransformation der Koordinaten des Messpunktes, insbesondere von einem Koordinatensystem des Laser-Messmoduls in ein Koordinatensystem des Anzeigemoduls, vorgesehen. Insbesondere ist die Recheneinheit dazu vorgesehen, Koordinaten der Positionsdaten in einem Quell-Koordinatensystem in Koordinaten der Positionsdaten in einem Ziel-Koordinatensystem umzurechnen. Insbesondere ist die Recheneinheit dazu vorgesehen, eine echte und/oder scheinbare Bewegung eines mittels des Anzeigemoduls dargestellten Abbilds des Messpunktes, beispielsweise aufgrund einer Bewegung des Anzeigemoduls, darzustellen und/oder aufzuzeichnen und/oder abzuspielen. Vorzugsweise ist die Recheneinheit als Teil des Anzeigemoduls ausgebildet. Alternativ kann die Recheneinheit als Teil des Laser-Messmoduls ausgebildet sein.

Ferner wird ein Verfahren zu einer Darstellung eines Messpunktes mittels des erfindungsgemäßen Systems vorgeschlagen, bei dem Lagedaten des Anzeigemoduls mit Lagedaten des Laser-Messmoduls abgeglichen werden. Dadurch können Lagedaten in vorteilhafter Weise aufeinander bezogen und/oder verglichen werden. Dadurch können auf eine einfache Weise Fehler bei einer Anzeige mittels des Anzeigemoduls begrenzt werden. Eine Position eines Messpunktes kann für einen Benutzer auch bei ungünstigen Bedingungen und/oder über eine große Entfernung besonders gut erkennbar dargestellt werden. Unter "abgleichen" soll in diesem Zusammenhang insbesondere verstanden werden, dass zumindest ein Bezugspunkt und/oder zumindest eine Bezugsrichtung der Lagedaten aufeinander abgestimmt, insbesondere zur Deckung gebracht werden. Vorzugsweise werden zumindest vier Bezugspunkte und/oder zumindest drei Bezugsrichtungen, insbesondere drei orthogonale Bezugsrichtungen, aufeinander abgestimmt. Es ist denkbar, dass das Laser-Messmodul und das Anzeigemodul zu dem Abgleich mittels einer Kopplungseinheit des Systems lösbar mechanisch miteinander verbunden werden. Vorzugsweise wird bei dem Abgleich zumindest eine Lageerfassungseinheit des Anzeigemoduls auf zumindest eine Lageerfassungseinheit des Laser-Messmoduls einjustiert oder umgekehrt. Es ist auch denkbar, dass eine Lageerfassungseinheit des Laser-Messmoduls und/oder eine Lageerfassungseinheit des Anzeigemoduls auf ein ortsfestes Bezugssystem und/oder auf ein Bezugssystem eines Positionierungssystems einjustiert werden. Es ist ferner denkbar, dass die Lagedaten des Anzeigemoduls mit Lagedaten des Laser-Messmoduls unter Verwendung von Umgebungsdaten, insbesondere Kameradaten, abgeglichen werden.

In einer vorteilhaften Ausgestaltung wird das Anzeigemodul zumindest in einem Verfahrensschritt unabhängig von dem Laser-Messmodul im Raum bewegt und eine Lageerfassungseinheit des Anzeigemoduls erfasst Lagedaten des Anzeigemoduls. Dadurch kann ein Benutzer eine Position des Messpunktes kontinuierlich verfolgen. Es kann ein besonders effizientes Verfahren zur Festlegung und/oder Kontrolle einer Position eines Messpunktes erreicht werden. Vorzugsweise erfasst die Lageerfassungseinheit des Anzeigemoduls Lagedaten des Anzeigemoduls regelmäßig, insbesondere periodisch, und/oder in Echtzeit.

Ferner wird vorgeschlagen, dass in zumindest einem Verfahrensschritt eine Recheneinheit des Systems zumindest aus den Lagedaten des Laser-Messmoduls und aus den Lagedaten des Anzeigemoduls Anzeigekoordinaten des angepeilten Messpunktes zu einer Anzeige des Messpunktes ermittelt. Dadurch kann ein Benutzer eine Position eines Messpunktes besonders einfach erfassen. Vorzugsweise ermittelt die Recheneinheit die Anzeigekoordinaten mittels einer trigonometrischen Transformationsvorschrift zu einer Umrechnung der Positionsdaten aus einem Koordinatensystem des Laser-Moduls in ein Koordinatensystem der Anzeigeeinheit. Alternativ kann die Recheneinheit aus Positionsdaten des Messpunktes bezogen auf ein ortsfestes Koordinatensystem, aus den Lagedaten des Laser-Messmoduls und aus Lagedaten des Anzeigemoduls, die auf eine Lage des Laser-Messmoduls oder auf das ortsfeste Koordinatensystem bezogen sind, die Anzeigekoordinaten des angepeilten Messpunktes ermitteln.

In vorteilhafter Weise wird zumindest in einem Verfahrensschritt mittels des Laser-Messmoduls zumindest ein weiterer Messpunkt angepeilt und das Anzeigemodul stellt den zumindest einen weiteren Messpunkt dar. Dadurch kann ein besonders einfaches und benutzerfreundliches Verfahren für komplexe Messvorgänge, beispielsweise für indirekte Messungen, erreicht werden. Vorzugsweise zeigt das Anzeigemodul den Messpunkt und den zumindest einen weiteren Messpunkt gleichzeitig an.

Ferner wird vorgeschlagen, dass zumindest in einem Verfahrensschritt das Anzeigemodul eine Linie zwischen dem Messpunkt und dem zumindest einen weiteren Messpunkt darstellt. Dadurch kann ein besonders anschauliches Verfahren für einen Messvorgang, insbesondere für indirekte Messungen, erreicht werden. Es kann ein Verfahren zur Messung schwer zugänglicher Strecken, beispielsweise an Gebäuden, bereitgestellt werden. Unter einer "Linie" soll in diesem Zusammenhang insbesondere eine gerade Verbindungsstrecke zwischen den Messpunkten verstanden werden.

In einer vorteilhaften Ausgestaltung wird zumindest in einem Verfahrensschritt mittels des Laser-Messmoduls eine Folge von zumindest drei Messpunkten angepeilt und das Anzeigemodul zeigt die Messpunkte zu einer Auswahl für einen Messvorgang an. Dadurch kann ein Verfahren zu einer Vermessung komplexer Figuren bereitgestellt werden. Es ist denkbar, dass in einem Betriebsmodus des Systems ein Benutzer mittels der Recheneinheit anhand der Folge von Punkten eine geometrische Figur konstruiert, wie beispielsweise einen Polygonzug, einen Kreis, einen Quader, eine Kugel, einen Zylinder oder eine anderen dem Fachmann geeignet erscheinende Figur. Es ist ferner denkbar, dass das Anzeigemodul die Figur darstellt, beispielsweise als ein Gitternetz.

Ferner wird vorgeschlagen, dass eine Recheneinheit des Systems zumindest eine durch die Messpunkte festgelegte geometrische Größe berechnet. Dadurch kann ein besonders leistungsfähiges Verfahren erreicht werden. Es kann ein geringer Zeitaufwand für einen Messvorgang erreicht werden. Unter einer "geometrischen Größe" soll in diesem Zusammenhang insbesondere eine Summe von Entfernungen, ein Flächeninhalt, ein Rauminhalt, ein Winkel und/oder eine Winkelsumme verstanden werden. Es ist denkbar, dass die geometrische Größe auf eine von einem Benutzer mittels der Recheneinheit konstruierte und von der Anzeigeeinheit dargestellte Figur bezogen ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: eine schematische Übersicht über ein erfindungsgemäßes System mit einem Laser-Messmodul und einem Anzeigemodul,
- Fig. 2: eine schematische Darstellung des Laser-Messmoduls,
- Fig. 3: eine schematische Darstellung des Anzeigemoduls und
- Fig. 4: ein Ablaufschema zu einem Messverfahren mittels des Systems.
Beschreibung der Ausführungsbeispiele

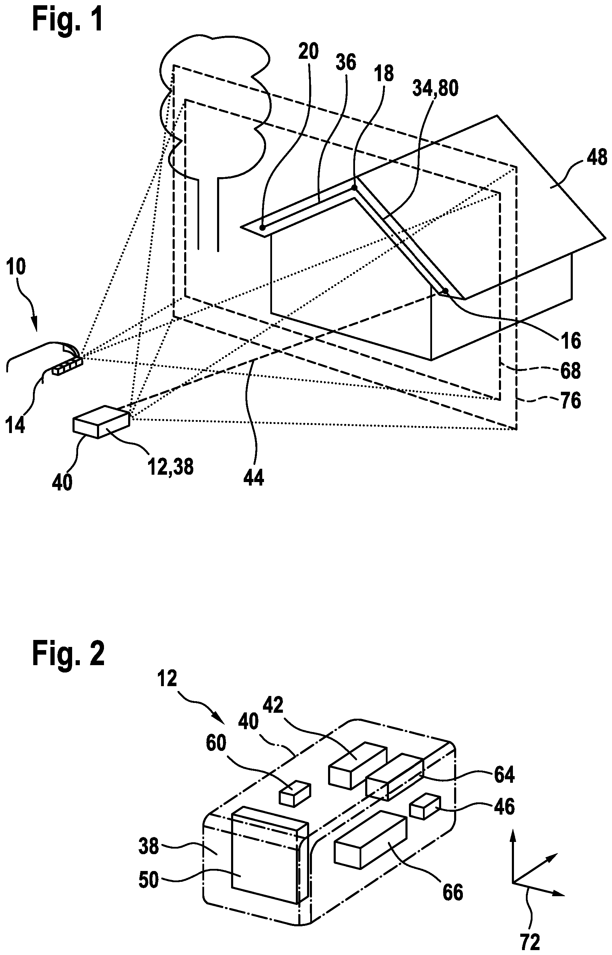

Figur 1 zeigt ein System 10 mit einem Laser-Messmodul 12, das zu einer Längenmessung vorgesehen ist, und mit einem Anzeigemodul 14, das dazu vorgesehen ist, einen mittels des Laser-Messmoduls 12 angepeilten Messpunkt 16 elektronisch darzustellen. Das Laser-Messmodul 12 umfasst ein Laser-Messgerät 38 mit einem Gehäuse 40. Das Laser-Messgerät 38 umfasst eine Strahleinheit 42, die dazu vorgesehen ist, einen Laser-Messstrahl 44 zu einer Entfernungsmessung auszusenden. Das Laser-Messgerät 38 umfasst eine Sensoreinheit 46, die dazu vorgesehen ist, eine Reflexion des Laser-Messstrahls 44 an einem Messobjekt 48 zu erfassen. In dem vorliegenden Ausführungsbeispiel ist die Strahleinheit 42 dazu vorgesehen, den Laser-Messstrahl 44 mit einer Frequenz außerhalb eines sichtbaren Spektrums auszusenden (vgl. Figur 2). Die Sensoreinheit 46 ist dazu vorgesehen, die Reflexion außerhalb des sichtbaren Spektrums zu erfassen. Das Laser-Messgerät 38 umfasst eine Steuer- und Regeleinheit 50, die dazu vorgesehen ist, ein Signal der Sensoreinheit 46 auszuwerten und eine Entfernung zu dem Messobjekt 48 zu bestimmen. Die Steuer- und/oder Regeleinheit 50 ist dazu vorgesehen, eine Phasenlage eines reflektierten Lichtanteils im Vergleich zu einer Phasenlage des ausgesandten Laser-Messstrahls 44 und/oder eine Laufzeit des Lichts des ausgesandten Laser-Messstrahls 44 zu dem entfernten Messobjekt 48, an dem der Laser-Messstrahl 44 zumindest teilweise reflektiert wird, und zurück zu dem Laser-Messgerät 38 auszuwerten.

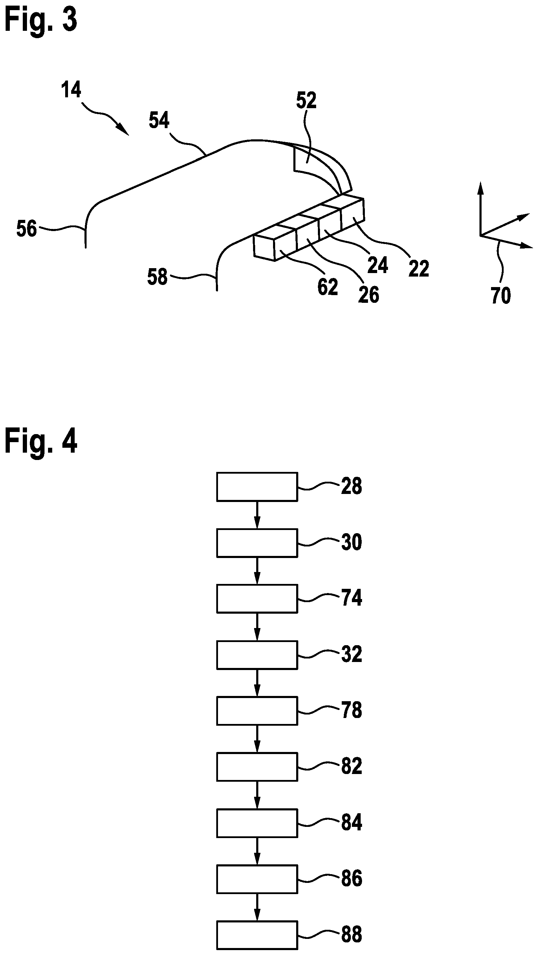

Das Anzeigemodul 14 ist separat zu dem Laser-Messmodul 12 ausgebildet. Das Anzeigemodul 14 ist separat zu dem Laser-Messgerät 38 des Laser-Messmoduls 12 ausgebildet. Das Anzeigemodul 14 ist dazu vorgesehen, einen Benutzer bei einem Messvorgang, beispielsweise bei einer Festlegung zu messender Distanzen zu unterstützen. Das Anzeigemodul 14 ist dazu vorgesehen, unabhängig von dem Laser-Messmodul 12 im Raum bewegt zu werden. Das Anzeigemodul 14 ist dazu vorgesehen, unabhängig von dem Laser-Messgerät 38 des Laser-Messmoduls 12 im Raum bewegt zu werden. Das Anzeigemodul 14 ist dazu vorgesehen, eine Position des Messpunkts 16 für den Benutzer sichtbar zu machen. In dem vorliegenden Ausführungsbeispiel ist das Anzeigemodul 14 als eine Brille ausgebildet und umfasst eine Anzeigeeinheit 52, und eine Rahmeneinheit 54 (vgl. Figur 3). Die Anzeigeeinheit 52 ist dazu vorgesehen, von dem Benutzer am Kopf getragen zu werden. Die Anzeigeeinheit 52 weist Befestigungsmittel 56, 58 auf, die dazu vorgesehen sind, das Anzeigemodul 14 an einem menschlichen Körper zu befestigen. Die Befestigungsmittel 56, 58 sind in dem vorliegenden Ausführungsbeispiel als Ohrenbügel ausgebildet.

Das System 10 umfasst eine Kommunikationsvorrichtung, die dazu vorgesehen ist, Positionsdaten des angepeilten Messpunkts 16 von dem Laser-Messmodul 12 zu dem Anzeigemodul 14 zu übertragen. In dem vorliegenden Ausführungsbeispiel ist die Kommunikationsvorrichtung zu einer drahtlosen Datenübertragung vorgesehen. Die Kommunikationsvorrichtung umfasst eine im dem Gehäuse 40 des Laser-Messgeräts 38 angeordnete Sendeeinheit 60 und eine an dem Anzeigemodul 14 angeordnete Empfangseinheit 62. Die Kommunikationsvorrichtung ist zu einer Funkübertragung von Daten vorgesehen. Die Kommunikationsvorrichtung weist standardisierte Schnittstellen auf. Die Kommunikationsvorrichtung weist in dem vorliegenden Ausführungsbeispiel eine Bluetooth-Schnittstelle und/oder eine Wi-Fi-Schnittstelle auf. Die Kommunikationsvorrichtung ist dazu vorgesehen, in einem Betriebszustand die Positionsdaten des Messpunkts 16 regelmäßig zu übertragen. Die Kommunikationsvorrichtung ist dazu vorgesehen, in einem Betriebszustand die Positionsdaten des Messpunkts 16 in Echtzeit zu übertragen.

Das Laser-Messmodul 12 weist eine Erfassungseinheit 64 zu einer Erfassung von Umgebungsdaten auf. In dem vorliegenden Ausführungsbeispiel ist die Erfassungseinheit 64 des Laser-Messmoduls 12 als eine Kamera ausgebildet. Das Anzeigemodul 14 weist eine Erfassungseinheit 22 zu einer Erfassung von Umgebungsdaten auf. In dem vorliegenden Ausführungsbeispiel ist die Erfassungseinheit 22 des Anzeigemoduls 14 als eine Kamera ausgebildet. Die Erfassungseinheit 64 des Laser-Messmoduls 12 und die Erfassungseinheit 22 des Anzeigemoduls 14 sind dazu vorgesehen, miteinander abgleichbare Umgebungsdaten zu erfassen. Die Kommunikationsvorrichtung ist dazu vorgesehen, von der Erfassungseinheit 64 des Laser-Messmoduls 12 erfasste Umgebungsdaten und/oder von der Erfassungseinheit 22 des Anzeigemoduls 14 erfasste Umgebungsdaten zu übertragen.

Das Anzeigemodul 14 umfasst eine Lageerfassungseinheit 24. In dem vorliegenden Ausführungsbeispiel ist die Lageerfassungseinheit 24 dazu vorgesehen, eine Lageveränderung des Anzeigemoduls 14 zu erfassen. Die Lageerfassungseinheit 24 umfasst eine Mehrzahl von Inertialsensoren und einen Kompass. Die Lageerfassungseinheit 24 ist dazu vorgesehen, Signale der Inertialsensoren zu einer Bewegung, insbesondere einer Beschleunigung, und/oder einer Drehung, insbesondere einer Drehbeschleunigung, des Anzeigemoduls 14 bezogen auf eine Ausgangslage auszuwerten. Das Laser-Messmodul 12 umfasst eine Lageerfassungseinheit 66. In dem vorliegenden Ausführungsbeispiel ist die Lageerfassungseinheit 66 des Laser-Messmoduls 12 dazu vorgesehen, eine Lageveränderung des Laser-Messmoduls 12 zu erfassen. Die Lageerfassungseinheit 66 ist dazu vorgesehen, eine Bewegung und/oder eine Drehung des Laser-Messmoduls 12 bezogen auf eine Ausgangslage zu erfassen.

Das System 10 umfasst eine Recheneinheit 26, die dazu vorgesehen ist, aus Positionsdaten des angepeilten Messpunkts 16, insbesondere aus einer Entfernung zu dem Laser-Messmodul 12 und/oder aus Koordinaten bezogen auf ein Koordinatensystem 72 des Laser-Messmoduls 12 und/oder bezogen auf ein ortsfestes Koordinatensystem, und aus Lagedaten des Anzeigemoduls 14, insbesondere aus einer Position und/oder Ausrichtung des Anzeigemoduls 14 bezogen auf das Koordinatensystem 72 des Laser-Messmoduls 12 und/oder bezogen auf das ortsfeste Koordinatensystem, Koordinaten für eine Anzeige des Messpunkts 16 zu bestimmen. In dem vorliegenden Ausführungsbeispiel ist die Recheneinheit 26 als Teil des Anzeigemoduls 14 ausgebildet. Die Recheneinheit 26 ist signaltechnisch mit der Erfassungseinheit 22 verbunden. Die Recheneinheit 26 ist signaltechnisch mit der Lageerfassungseinheit 24 des Anzeigemoduls 14 verbunden. Die Recheneinheit 26 ist signaltechnisch mit der Empfangseinheit 62 der Kommunikationsvorrichtung verbunden. Die Recheneinheit 26 ist signaltechnisch mit der Anzeigeeinheit 52 verbunden. Die Anzeigeeinheit 52 des Anzeigemoduls 14 ist in dem vorliegenden Ausführungsbeispiel dazu vorgesehen, ein Abbild des Messpunkts 16 elektronisch in ein Sichtfeld 68 des Benutzers einzublenden. Die Koordinaten des Abbilds sind abhängig von einer Position und einer Ausrichtung des Anzeigemoduls 14. Die Koordinaten sind eine Funktion der Position und der Ausrichtung des Anzeigemoduls 14.

Bei einem Verfahren zu einer Darstellung des Messpunkts 16 werden in einem Verfahrensschritt 28 Lagedaten des Anzeigemoduls 14 mit Lagedaten des Laser-Messmoduls 12 abgeglichen (vgl. Figur 4). In einem Initialisierungsschritt werden das Laser-Messmodul 12 und Anzeigemodul 14 miteinander mechanisch gekoppelt, wodurch eine Lage des Anzeigemoduls 14 relativ zu einer Lage des Laser-Messmoduls 12 festgelegt ist. Die Lageerfassungseinheit 24 des Anzeigemoduls 14 und die Lageerfassungseinheit 24 des Laser-Messmoduls 12 werden miteinander abgeglichen, d.h. es wird ein gemeinsames Bezugssystem bestimmt, beispielsweise ein auf eine Lage des Laser-Messmoduls 12 festgelegtes Bezugssystem. Ein Koordinatensystem 70 des Anzeigemoduls 14 wird auf ein Koordinatensystem 72 des Laser-Messmoduls 12 justiert. Eine relative Lage der Koordinatensysteme 70, 72 zueinander, eine Ausrichtung der Koordinatensysteme 70, 72 zueinander und relative Skalierungsfaktoren in drei Raumrichtungen werden bestimmt. Alternativ kann aber auch ein auf eine Lage des Anzeigemoduls 14 festgelegtes Bezugssystem oder ein ortsfestes Bezugssystem als das gemeinsame Bezugssystem bestimmt werden.

In einem Betriebsmodus wird insbesondere in einem nachfolgenden Verfahrensschritt 30 das Anzeigemodul 14 unabhängig von dem Laser-Messmodul 12 im Raum bewegt. Das Laser-Messmodul 12 wird im Raum bewegt, wodurch eine Position des Messpunkts 16 verändert wird. Die Kommunikationsvorrichtung überträgt in einem Verfahrensschritt 74, insbesondere bei der Bewegung des Anzeigemoduls 14 und/oder bei der Bewegung des Laser-Messmoduls 12, regelmäßig in Echtzeit die Lagedaten des Laser-Messmoduls 12. Die Lageerfassungseinheit 24 des Anzeigemoduls 14 erfasst die Lageänderungen des Anzeigemoduls 14. Die Lageerfassungseinheit 24 des Anzeigemoduls 14 erfasst die Lagedaten des Anzeigemoduls 14. Die Recheneinheit 26 verfolgt die Lageänderungen nach. Die Recheneinheit 26 wertet die von der Empfangseinheit 62 der Kommunikationsvorrichtung empfangenen Daten aus und gleicht sie mit den von der Lageerfassungseinheit 24 erfassten Lagedaten ab, wodurch eine Information über eine relative Position und eine Ausrichtung des Anzeigemoduls 14 gegenüber dem Laser-Messmodul 12 erhalten wird.

Das Laser-Messmodul 12 erfasst eine Abstrahlrichtung des Laser-Messstrahls 44. Die Sensoreinheit 46 des Laser-Messmoduls 12 erfasst Reflexionen des Laser-Messstrahls 44 an einem Messobjekt 48 und übermittelt Empfangsdaten an die Steuerund Regeleinheit 50. Die Steuer- und Regeleinheit 50 bestimmt eine Entfernung zwischen dem Laser-Messmodul 12 und dem Messpunkt 16, d.h. der Stelle wo der Laser-Messstrahl 44 auf das Messobjekt 48 trifft. Die Steuer- und Regeleinheit 50 ermittelt aus der Abstrahlrichtung des Laser-Messstrahls 44 und aus der Entfernung des Messpunkts 16 eine Position des Messpunkts 16 bezogen auf die Lage des Laser-Messmoduls 12. Die Kommunikationsvorrichtung übermittelt Positionsdaten des Messpunkts 16 bezogen auf das gemeinsame Bezugssystem, beispielsweise bezogen auf das Koordinatensystem 72 des Laser-Messmoduls 12 an das Anzeigemodul 14. Die Kommunikationsvorrichtung übermittelt die Positionsdaten des Messpunkts 16 regelmäßig. Die Kommunikationsvorrichtung übermittelt die Positionsdaten des Messpunkts 16 in Echtzeit. Die Recheneinheit 26 wertet die übermittelten Positionsdaten des Messpunkts 16 aus. Die Recheneinheit 26 rechnet mittels einer Transformationsvorschrift die übermittelten Positionsdaten des angepeilten Messpunkts 16 von dem Koordinatensystem 72 des Laser-Messmoduls 12 in das Koordinatensystem 70 des Anzeigemoduls 14 um. Die Positionsdaten sind beispielsweise als kartesische Koordinaten als Achsenabschnitte dreier linear unabhängiger Koordinatenachsen gegeben. Die Positionsdaten sind beispielsweise als Polarkoordinaten eines Vektors zwischen dem Laser-Messmodul 12 und dem Messpunkt 16 gegeben, insbesondere als zwei Winkelwerte und ein Entfernungswert, der einer Länge des Vektors zwischen dem Laser-Messmodul 12 und dem Messpunkt 16 entspricht. Es ist denkbar, dass die Positionsdaten als ein anderes dem Fachmann als sinnvoll erscheinendes Datentupel gegeben sind. Beispielsweise umfasst die Transformationsvorschrift einen Satz von Anweisungen zu einer Umrechnung zwischen Koordinatensystemen einer gleichen oder einer unterschiedlichen Struktur, beispielsweise zwischen zwei kartesischen Koordinatensystemen, zwischen einem kartesischen Koordinatensystem und einem Polarkoordinatensystem und/oder zwischen zwei Polarkoordinatensystemen. Die Recheneinheit 26 berechnet Koordinaten zu einer Anzeige des Messpunkts 16 mittels der Anzeigeeinheit 52, bezogen auf das Koordinatensystem 70 des Anzeigemoduls 14 in Abhängigkeit von den Lagedaten des Laser-Messmoduls 12 und in Abhängigkeit von den Lagedaten des Anzeigemoduls 14. Die Recheneinheit 26 ermittelt in einem weiteren Verfahrensschritt 32 aus den Lagedaten des Laser-Messmoduls 12 und aus den Lagedaten des Anzeigemoduls 14 Anzeigekoordinaten des angepeilten Messpunkts 16 zu einer Anzeige des Messpunkts 16. Die Recheneinheit 26 ermittelt die Anzeigekoordinaten regelmäßig. Die Recheneinheit 26 ermittelt die Anzeigekoordinaten in Echtzeit.

In dem vorliegenden Ausführungsbeispiel erfasst die Erfassungseinheit 64 des Laser-Messmoduls 12 Umgebungsdaten des Laser-Messmoduls 12 in einem Sichtfeld 76 (vgl. Figur 1). Die Kommunikationsvorrichtung überträgt in einem Verfahrensschritt 78 die Umgebungsdaten an das Anzeigemodul 14. Die Erfassungseinheit 22 des Anzeigemoduls 14 erfasst Umgebungsdaten des Anzeigemoduls 14 in einem Sichtfeld 68, das in dem vorliegenden Ausführungsbeispiel dem Sichtfeld 68 des Benutzers entspricht. Das Sichtfeld 76 der Erfassungseinheit 64 des Laser-Messmoduls 12 und das Sichtfeld 68 der Erfassungseinheit 22 des Anzeigemoduls 14 bilden sich überschneidende Bereiche der Umgebung ab. Die Recheneinheit 26 gleicht die Umgebungsdaten des Laser-Messmoduls 12 und die Umgebungsdaten des Anzeigemoduls 14 miteinander ab. Die Recheneinheit 26 umfasst beispielsweise Routinen zu einer Bildauswertung und ist dazu vorgesehen, Elemente von abgebildeten Objekten, wie Flächen und/oder Kanten zu identifizieren und/oder zu verorten. Es ist denkbar, dass die Recheneinheit 26 Routinen zu einer Bilderkennung oder dergleichen umfasst, und dazu vorgesehen ist, Abbilder von Objekten mit einer Menge von Vergleichsbildern, insbesondere von abstrahiert abgelegten Vergleichsbildern, abzugleichen und/oder zu kategorisieren. Die Recheneinheit 26 ermittelt für die sich überschneidenden Bereiche eine Korrektur und wendet diese auf die Anzeigekoordinaten des angepeilten Messpunkts 16 an. Die Recheneinheit 26 vergleicht beispielsweise Abbilder von Objekten, die in dem Sichtfeld 76 der Erfassungseinheit 64 des Laser-Messmoduls 12 enthalten sind, mit Abbildern von Objekten, die in dem Sichtfeld 68 der Erfassungseinheit 22 des Anzeigemoduls 24 enthalten sind, und/oder ordnet die Abbilder einander zu. In einer alternativen Ausgestaltung kann die Erfassung und der Abgleich der Umgebungsdaten entfallen. Die Recheneinheit 26 übermittelt die Anzeigekoordinaten an die Anzeigeeinheit 52. Die Anzeigeeinheit 52 blendet ein Abbild des Messpunkts 16 gemäß den Anzeigekoordinaten positionsgetreu in ein von dem Benutzer wahrnehmbares Bild der Umgebung des Anzeigemoduls 14 ein. In einem Betriebsmodus zeichnet die Recheneinheit 26 eine von der Anzeigeeinheit 52 erzeugte Bildfolge auf. Die Recheneinheit 26 zeichnet eine Darstellung des Messpunkts 16 auf. Die Recheneinheit 26 ist dazu vorgesehen, eine aufgezeichnete Darstellung wiederzugeben.

In einem Betriebsmodus des Systems 10 speichert die Recheneinheit 26 die Anzeigekoordinaten des Messpunkts 16. Mittels des Laser-Messmoduls 12 wird in einem Verfahrensschritt 82 zumindest ein weiterer Messpunkt 18 angepeilt. Analog zu der Vorgehensweise für den abgespeicherten Messpunkt 16 ermittelt die Steuer- und Regeleinheit 50 des Laser-Messmoduls 12 die Positionsdaten des weiteren Messpunkts 18, übermittelt die Kommunikationsvorrichtung die Koordinaten des weiteren Messpunkts 18 und die Recheneinheit 26 des Anzeigemoduls 14 ermittelt die Anzeigekoordinaten des weiteren Messpunkts 18 bezogen auf das Koordinatensystem 70 des Anzeigemoduls 14. Das Anzeigemodul 14 stellt den weiteren Messpunkt 16 dar. Die Anzeigeeinheit 52 blendet ein Abbild des Messpunkts 18 zusammen mit dem Abbild des gespeicherten Messpunkts 16 in das von dem Benutzer wahrnehmbare Bild der Umgebung ein. In einem optionalen Verfahrensschritt 84 stellt das Anzeigemodul 14 eine Linie 34 zwischen dem Messpunkt 16 und dem weiteren Messpunkt 18 dar. Die Linie 34 macht für den Benutzer eine Messstrecke 80 deutlich erkennbar. Anhand des weiteren Messpunkts 18 kann von dem Benutzer die Messstrecke 80 festgelegt werden und mittels des Laser-Messmoduls 12 eine Länge der Messstrecke 80 ermittelt werden.

In einem Betriebsmodus des Systems 10 wird in einem Verfahrensschritt 86 mittels des Laser-Messmoduls 12 eine Folge von drei Messpunkten 16, 18, 20 angepeilt. Mittels des Laser-Messmoduls 12 werden von dem Benutzer beispielsweise nacheinander ein erster Messpunkt 16, ein weiterer Messpunkt 18 und ein dritter Messpunkt 20 angepeilt. Das Anzeigemodul 14 zeigt die Messpunkte 16, 18, 20 jeweils bei dem Peilvorgang für den Benutzer erkennbar an. Die Steuer- und Regeleinheit 50 ermittelt bei dem Peilvorgang eine Entfernung der Messpunkte 16, 18, 20 von dem Laser-Messmodul 12. Es ist denkbar, dass der Benutzer weitere Messpunkte anpeilt und ihre Position für einen Messvorgang festlegt. Das Anzeigemodul 14 zeigt die Messpunkte 16, 18, 20 zu einer Auswahl für einen Messvorgang an. Anhand der Anzeige sind zu vermessende Strecken, Figuren und/oder Flächen, beispielsweise in einer Auswahl durch den Benutzer, festlegbar. Es ist denkbar, dass alle oder ein Teil der Messpunkte 16, 18, 20 zu einer Bestimmung einer Länge eines Polygonzugs in einem Messvorgang einbeziehbar sind. Der Benutzer kann durch alle oder einen Teil der Messpunkte 16, 18, 20 eine geometrische Figur definieren zu einer Bestimmung geometrischer Größen, wie beispielsweise Längen, Flächeninhalte und/oder Rauminhalte. In einem Betriebsmodus des Systems 10 verbindet die Recheneinheit 26 ausgewählte Messpunkte 16, 18, 20 mit Linien 34, 36 und die Anzeigeeinheit 52 blendet die Linien 34, 36 in das Sichtfeld 68 des Benutzers ein. Für den Benutzer werden für einen Messvorgang festgelegte Strecken erkennbar.

Die Recheneinheit 26 berechnet insbesondere in einem nachfolgenden Verfahrensschritt 88 eine durch die Messpunkte 16, 18, 20 festgelegte geometrische Größe oder eine Mehrzahl geometrischer Größen, wie beispielsweise eine Gesamtlänge eines durch die Messpunkte 16, 18, 20 festgelegten Polygonzugs, eine Fläche oder eine Mehrzahl von Flächen einer durch die Messpunkte 16, 18, 20 festgelegten Figur oder einen Rauminhalt einer durch die Messpunkte 16, 18, 20 festgelegten Figur.

Die Verfahrensschritte 28, 30, 74, 32, 78, 82, 84, 86, 88 der Figur 4 können in einem vorteilhaften Ausführungsbeispiel einzeln oder auch in Kombination wiederholt durchlaufen werden, insbesondere auch in Form von Verfahrensblöcken wiederholt durchlaufen werden.

Insbesondere kann in einem bevorzugten Ausführungsbeispiel ein wiederholt durchgeführter Verfahrensblock aus den Verfahrensschritten 30, 74, 32 und optional auch 78 bestehen, d.h. aus unabhängiger Bewegung des Anzeigemoduls 14 und des Laser-Messmoduls 12 im Raum, Übertragung von Lagedaten des Laser-Messmoduls 12 durch die Kommunikationsvorrichtung sowie Ermittlung von Anzeigekoordinaten des angepeilten Messpunkts 16 zu einer Anzeige des Messpunkts 16 durch die Recheneinheit 26, optional auch Übertragung von Umgebungsdaten an das Anzeigemodul 14.

Ferner kann in einem Ausführungsbeispiel ein Verfahrensblock, insbesondere ein weiterer Verfahrensblock, beispielsweise aus den Verfahrensschritten 82, 84, 86, 88 bestehen, d.h. aus Anpeilung eines weiteren Messpunkts 18, Darstellen einer Linie zwischen angepeilten Messpunkten, ggf. Anpeilen eines dritten Messpunkts 16, 18, 20 sowie Berechnung einer durch Messpunkte 16, 18, 20 festgelegten geometrische Größe oder einer Mehrzahl geometrischer Größen.

Es sei darauf hingewiesen, dass ferner auch Verfahrensschritte ausgelassen oder optional durchgeführt werden können, insbesondere beispielsweise der Verfahrensschritt 78 betreffend die Übertragung von Umgebungsdaten an das Anzeigemodul 14 und/oder der Verfahrensschritt 84 betreffend das Darstellen einer Linie zwischen angepeilten Messpunkten 16, 18, 20. Weitere Kombinations- und/oder Reihungsund/oder Ablaufmöglichkeiten, insbesondere einem Fachmann notwendig oder sinnvoll erscheinende Kombinations- und/oder Reihungs- und/oder Ablaufmöglichkeiten, sind denkbar.

## Patentansprüche

1. System mit einem Laser-Messmodul (12), das zu einer Längenmessung vorgesehen ist und das zumindest ein handgehaltenes Laser-Messgerät (38) zu einer Längenmessung mittels zumindest eines Laserstrahls umfasst, wobei das Laser-Messgerät (38) eine Strahleinheit (42) umfasst, die dazu vorgesehen ist, einen Laser-Messstrahl (44) zu einer Entfernungsmessung auszusenden, wobei das Laser-Messgerät (38) eine Sensoreinheit (46) umfasst, die dazu vorgesehen ist, eine Reflexion des Laser Messstrahls (44) an einem Messobjekt (48) zu erfassen, wobei das Laser-Messgerät (38) eine Steuer- und Regeleinheit (50) umfasst, die dazu vorgesehen ist, ein Signal der Sensoreinheit (46) auszuwerten und eine Entfernung zu dem Messobjekt (48) zu bestimmen, wobei das Laser-Messmodul (12) dazu eingerichtet ist, eine Abstrahlrichtung des Laser-Messstrahls (44) zu erfassen, wobei die Sensoreinheit (46) dazu vorgesehen ist, eine Reflexion des Laser-Messstrahls (44) an dem Messobjekt (48) zu erfassen und Empfangsdaten an die Steuerund Regeleinheit (50) zu übermitteln, wobei die Steuer- und Regeleinheit (50) dazu vorgesehen ist, eine Entfernung zwischen dem Laser-Messmodul (12) und einem Messpunkt (16), d.h. der Stelle wo, der Laser-Messstrahl (44) auf das Messobjekt (48) trifft, zu bestimmen, und wobei die Steuer- und Regeleinheit (50) dazu eingerichtet ist, aus der Abstrahlrichtung des Laser-Messstrahls (44) und aus der Entfernung des Messpunkts (16) eine Position des Messpunkts (16) bezogen auf die Lage des Laser-Messmoduls (12) zu ermitteln, mit zumindest einem Anzeigemodul (14), das zumindest dazu vorgesehen ist, zumindest den mittels des Laser-Messmoduls (12) angepeilten Messpunkt (16, 18, 20) elektronisch darzustellen, wobei das Anzeigemodul (14) separat zum oder abnehmbar vom Laser-Messmodul (12) ausgebildet ist, J mit zumindest einer Kommunikationsvorrichtung, die dazu vorgesehen ist, zumindest Positionsdaten des angepeilten Messpunkts (16, 18, 20) von dem Laser-Messmodul (12) zu dem Anzeigemodul (14) zu übertragen, und mit einer Recheneinheit (26), die dazu vorgesehen ist, zumindest aus Positionsdaten des angepeilten Messpunktes (16, 18, 20) und aus Lagedaten des Anzeigemoduls (14) Koordinaten zu einer Anzeige des Messpunktes (16, 18, 20) zu bestimmen, wobei das Anzeigemodul (14) eine Lageerfassungseinheit (24) umfasst und wobei das Anzeigemodul (14) dazu vorgesehen ist, ein Abbild des Messpunkts (16) elektronisch in ein Sichtfeld (68) eines Benutzers und/oder in eine Umgebungsdarstellung einzublenden, um einen Benutzer bei einem Messvorgang, beispielsweise bei einer Festlegung zu messender Distanzen, zu unterstützen.

2. System nach Anspruch 1, **dadurch gekennzeichnet, dass** das Anzeigemodul (14) zumindest eine Erfassungseinheit (22) zu einer Erfassung von Umgebungsdaten aufweist.

3. Verfahren zu einer Darstellung eines Messpunktes (16, 18, 20) mittels eines Systems (10) nach einem der Ansprüche 1 oder 2, **dadurch gekennzeichnet, dass** zumindest in einem Verfahrensschritt (28) Lagedaten, d.h. Positionsdaten und/oder Ausrichtungsdaten, des Anzeigemoduls (14) mit Lagedaten des Laser-Messmoduls (12) abgeglichen werden.

4. Verfahren nach Anspruch 3, **dadurch gekennzeichnet, dass** zumindest in einem Verfahrensschritt (30) das Anzeigemodul (14) unabhängig von dem Laser-Messmodul (12) im Raum bewegt wird und eine Lageerfassungseinheit (24) des Anzeigemoduls (14) Lagedaten des Anzeigemoduls (14) erfasst.

5. Verfahren nach Anspruch 3 oder 4, **dadurch gekennzeichnet, dass** zumindest in einem Verfahrensschritt (32) eine Recheneinheit (26) des Systems (10) zumindest aus den Lagedaten des Laser-Messmoduls (12) und aus den Lagedaten des Anzeigemoduls (14) Anzeigekoordinaten des angepeilten Messpunktes (16, 18, 20) zu einer Anzeige des Messpunktes (16, 18, 20) ermittelt.

6. Verfahren nach einem der Ansprüche 3 bis 5, **dadurch gekennzeichnet, dass** zumindest in einem Verfahrensschritt (82) mittels des Laser-Messmoduls (12) zumindest ein weiterer Messpunkt (18, 20) angepeilt wird und das Anzeigemodul (14) den zumindest einen weiteren Messpunkt (18, 20) darstellt.

7. Verfahren nach Anspruch 6, **dadurch gekennzeichnet, dass** zumindest in einem Verfahrensschritt (84) das Anzeigemodul (14) eine Linie (34, 36) zwischen dem Messpunkt (16, 18) und dem zumindest einen weiteren Messpunkt (18, 20) darstellt.

8. Verfahren nach einem der Ansprüche 4 bis 7, **dadurch gekennzeichnet, dass** zumindest in einem Verfahrensschritt (86) mittels des Laser-Messmoduls (12) eine Folge von zumindest drei Messpunkten (16, 18, 20) angepeilt wird und das Anzeigemodul (14) die Messpunkte (16, 18, 20) zu einer Auswahl für einen Messvorgang anzeigt.

9. Verfahren nach Anspruch 8, **dadurch gekennzeichnet, dass** zumindest in einem Verfahrensschritt (88) eine Recheneinheit (26) des Systems (10) zumindest eine durch die Messpunkte (16, 18, 20) festgelegte geometrische Größe berechnet.

## Claims

1. System having a laser measuring module (12), which is provided for a length measurement and comprises at least one handheld laser measuring device (38) for a length measurement by means of at least one laser beam, wherein the laser measuring device (38) comprises a beam unit (42) which is provided for the purpose of emitting a laser measuring beam (44) for a distance measurement, wherein the laser measuring device (38) comprises a sensor unit (46) which is provided for the purpose of capturing a reflection of the laser measuring beam (44) at a measuring object (48), wherein the laser measuring device (38) comprises a control and regulating unit (50) which is provided for the purpose of evaluating a signal from the sensor unit (46) and determining a distance to the measuring object (48), wherein the laser measuring module (12) is configured to capture an emission direction of the laser measuring beam (44), wherein the sensor unit (46) is provided for the purpose of capturing a reflection of the laser measuring beam (44) at the measuring object (48) and transmitting received data to the control and regulating unit (50), wherein the control and regulating unit (50) is provided for the purpose of determining a distance between the laser measuring module (12) and a measuring point (16), that is to say the place at which the laser measuring beam (44) strikes the measuring object (48), and wherein the control and regulating unit (50) is configured to determine a position of the measuring point (16) based on the location of the laser measuring module (12) from the emission direction of the laser measuring beam (44) and from the distance of the measuring point (16), having at least one display module (14), which is at least provided for the purpose of electronically displaying at least the measuring point (16, 18, 20), the bearings of which have been taken by means of the laser measuring module (12), wherein the display module (14) is configured to be separate from or removable from the laser measuring module (12), having at least one communication apparatus which is provided for the purpose of transmitting at least position data relating to the measuring point (16, 18, 20), the bearings of which have been taken, from the laser measuring module (12) to the display module (14), and having a computing unit (26) which is provided for the purpose of determining coordinates for displaying the measuring point (16, 18, 20) at least from position data relating to the measuring point (16, 18, 20), the bearings of which have been taken, and from location data relating to the display module (14), wherein the display module (14) comprises a location capture unit (24), and wherein the display module (14) is provided for the purpose of electronically displaying an image of the measuring point (16) in a field of view (68) of a user and/or in an environmental display in order to assist a user in a measuring operation, for example when determining distances to be measured.

2. System according to Claim 1, **characterized in that** the display module (14) has at least one capture unit (22) for capturing environmental data.

3. Method for displaying a measuring point (16, 18, 20) by means of a system (10) according to either of Claims 1 and 2, **characterized in that** location data, that is to say position data and/or orientation data, relating to the display module (14) are compared with location data relating to the laser measuring module (12) at least in one method step (28) .

4. Method according to Claim 3, **characterized in that** the display module (14) is moved independently of the laser measuring module (12) in space and a location capture unit (24) of the display module (14) captures location data relating to the display module (14) at least in one method step (30).

5. Method according to Claim 3 or 4, **characterized in that** a computing unit (26) of the system (10) determines display coordinates of the measuring point (16, 18, 20), the bearings of which have been taken, for displaying the measuring point (16, 18, 20) at least from the location data relating to the laser measuring module (12) and from the location data relating to the display module (14) at least in one method step (32).

6. Method according to one of Claims 3 to 5, **characterized in that** the bearings of at least one further measuring point (18, 20) are taken by means of the laser measuring module (12) and the display module (14) displays the at least one further measuring point (18, 20) at least in one method step (82) .

7. Method according to Claim 6, **characterized in that** the display module (14) displays a line (34, 36) between the measuring point (16, 18) and the at least one further measuring point (18, 20) at least in one method step (84).

8. Method according to one of Claims 4 to 7, **characterized in that** bearings of a sequence of at least three measuring points (16, 18, 20) are taken by means of the laser measuring module (12) and the display module (14) displays the measuring points (16, 18, 20) for selection for a measuring operation at least in one method step (86).

9. Method according to Claim 8, **characterized in that** a computing unit (26) of the system (10) calculates at least one geometrical variable determined by the measuring points (16, 18, 20) at least in one method step (88).

## Revendications

1. Système comprenant un module de mesure laser (12) qui est prévu pour une mesure de longueur et qui comprend au moins un appareil de mesure laser portatif (38) pour une mesure de longueur au moyen d'au moins un faisceau laser, l'appareil de mesure laser (38) comprenant une unité de rayonnement (42) qui est prévue pour émettre un faisceau de mesure laser (44) pour une mesure télémétrique, l'appareil de mesure laser (38) comprenant une unité de capteur (46) qui est prévue pour détecter une réflexion du faisceau de mesure laser (44) sur un objet mesuré (48), l'appareil de mesure laser (38) comprenant une unité de commande et de régulation (50) qui est prévue pour évaluer un signal de l'unité de capteur (46) et pour déterminer une distance jusqu'à l'objet mesuré (48), le module de mesure laser (12) étant aménagé pour détecter une direction de rayonnement du faisceau de mesure laser (44), l'unité de capteur (46) étant prévue pour détecter une réflexion du faisceau de mesure laser (44) sur l'objet mesuré (48) et pour transmettre des données de réception à l'unité de commande et de régulation (50), l'unité de commande et de régulation (50) étant prévue pour déterminer une distance entre le module de mesure laser (12) et un point de mesure (16), c'est-à-dire l'endroit où le faisceau de mesure laser (44) est incident sur l'objet mesuré (48), et l'unité de commande et de régulation (50) étant aménagée pour déterminer à partir de la direction de rayonnement du faisceau de mesure laser (44) et à partir de la distance du point de mesure (16) une position du point de mesure (16) par rapport à la position du module de mesure laser (12),
comprenant au moins un module d'affichage (14) qui est au moins prévu pour représenter électroniquement au moins le point de mesure (16, 18, 20) visé au moyen du module de mesure laser (12), le module d'affichage (14) étant réalisé séparément ou de manière détachable du module de mesure laser (12),
comprenant au moins un dispositif de communication qui est prévu pour transmettre au moins des données de position du point de mesure visé (16, 18, 20) du module de mesure laser (12) au module d'affichage (14),
et comprenant une unité de calcul (26) qui est prévue pour déterminer au moins à partir des données de position du point de mesure visé (16, 18, 20) et à partir de données de situation du module d'affichage (14) des coordonnées pour un affichage du point de mesure (16, 18, 20), le module d'affichage (14) comprenant une unité de détection de situation (24), et le module d'affichage (14) étant prévu pour superposer électroniquement une image du point de mesure (16) sur un champ visuel (68) d'un utilisateur et/ou sur une représentation de l'environnement afin d'assister un utilisateur lors d'un processus de mesure, par exemple lors d'une définition de distances à mesurer.

2. Système selon la revendication 1, **caractérisé en ce que** le module d'affichage (14) présente au moins une unité de détection (22) pour une détection de données sur l'environnement.

3. Procédé de représentation d'un point de mesure (16, 18, 20) au moyen d'un système (10) selon l'une quelconque des revendications 1 et 2, **caractérisé en ce que** dans au moins une étape de procédé (28), des données de situation, c'est-à-dire des données de position et/ou des données d'orientation, du module d'affichage (14) sont comparées à des données de situation du module de mesure laser (12).

4. Procédé selon la revendication 3, **caractérisé en ce que** dans au moins une étape de procédé (30), le module d'affichage (14) est déplacé dans l'espace indépendamment du module de mesure laser (12), et une unité de détection de situation (24) du module d'affichage (14) détecte des données de situation du module d'affichage (14).

5. Procédé selon la revendication 3 ou 4, **caractérisé en ce que** dans au moins une étape de procédé (32), une unité de calcul (26) du système (10) détermine au moins à partir des données de situation du module de mesure laser (12) et des données de situation du module d'affichage (14) des coordonnées d'affichage du point de mesure visé (16, 18, 20) pour un affichage du point de mesure (16, 18, 20).

6. Procédé selon l'une quelconque des revendications 3 à 5, **caractérisé en ce que** dans au moins une étape de procédé (82), au moyen du module de mesure laser (12), au moins un autre point de mesure (18, 20) est visé, et le module d'affichage (14) représente ledit au moins un autre point de mesure (18, 20).

7. Procédé selon la revendication 6, **caractérisé en ce que** dans au moins une étape de procédé (84), le module d'affichage (14) représente une ligne (34, 36) entre le point de mesure (16, 18) et ledit au moins un autre point de mesure (18, 20).

8. Procédé selon l'une quelconque des revendications 4 à 7, **caractérisé en ce que** dans au moins une étape de procédé (86), au moyen du module de mesure laser (12), une série d'au moins trois points de mesure (16, 18, 20) est visée, et le module d'affichage (14) affiche les points de mesure (16, 18, 20) pour une sélection pour un processus de mesure.

9. Procédé selon la revendication 8, **caractérisé en ce que** dans au moins une étape de procédé (88), une unité de calcul (26) du système (10) calcule au moins une grandeur géométrique définie par les points de mesure (16, 18, 20).
